(19) Europäisches Patentamt

European Patent Office

Office européen des brevets

(11) **EP 4 386 698 A1**

(12) # EUROPEAN PATENT APPLICATION

(43) Date of publication:
**19.06.2024 Bulletin 2024/25**

(21) Application number: **23215076.3**

(22) Date of filing: **07.12.2023**

(51) International Patent Classification (IPC):
***G06V 30/418*** *(2022.01)*

(52) Cooperative Patent Classification (CPC):
**G06V 30/418;** G06F 16/93; G06V 30/40;
G06V 30/414

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 US 202218064710**

(71) Applicant: **SAP SE
69190 Walldorf (DE)**

(72) Inventors:
- **ZEISE, Manuel
D-69190 Walldorf (DE)**
- **LEHNE, Marius
D-69190 Walldorf (DE)**

(74) Representative: **DeltaPatents B.V.
Fellenoord 370
5611 ZL Eindhoven (NL)**

(54) **MULTI-MODE IDENTIFICATION OF DOCUMENT LAYOUTS**

(57) A method is provided for multi-mode identification of document layouts. The method may include determining, based on a received document, a plurality of layout characteristics including a spatial position of one or more document features included in the received document and/or a numeric representation of the one or more document features included in the received document. The method may include generating an aggregated similarity score by at least comparing the plurality of layout characteristics to a first plurality of predefined layout characteristics of a first predefined layout of a plurality of predefined layouts. The method may further include identifying a layout of the received document as the first predefined layout of the plurality of predefined layouts based on the aggregated similarity score meeting a threshold score. The method may also include performing a document processing operation based on the identified layout. Related systems and methods are provided.

FIG. 1

EP 4 386 698 A1

**Description**

**TECHNICAL FIELD**

The subject matter described herein relates generally to document processing and more specifically to multi-mode identification of document layouts.

**BACKGROUND**

Enterprise software applications process scanned documents by extracting text and other information from those documents and converting the extracted text into database entries that can be used for various purposes. The manner in which the text or other information is extracted from the documents and/or the application of such extracted information may depend on a particular layout of the document. However, conventional approaches to identifying document layouts are generally either not specific enough to reliably distinguish similar but different layouts or such approaches are not robust enough to small variations in the layout such as address fields with different lengths. Thus, conventional approaches may be unable to determine or may inaccurately determine documents layouts.

**SUMMARY**

Systems, methods, and articles of manufacture, including computer program products, are provided for multi-mode identification of document layouts. In one aspect, there is provided a system including at least one data processor and at least one memory. The at least one memory may store instructions that cause operations when executed by the at least one data processor. The operations may include: determining, based on a received document, a plurality of layout characteristics including a spatial position of one or more document features included in the received document and/or a numeric representation of the one or more document features included in the received document. The operations may also include generating an aggregated similarity score by at least comparing the plurality of layout characteristics to a first plurality of predefined layout characteristics of a first predefined layout of a plurality of predefined layouts. The first plurality of predefined layout characteristics includes an average spatial position of the one or more document features included in a plurality of sample documents having the first predefined layout and/or an average numeric representation of the one or more document features included in the plurality of sample documents having the first predefined layout. The operations also include identifying a layout of the received document as the first predefined layout of the plurality of predefined layouts based on the aggregated similarity score meeting a threshold score. The operations also include performing a document processing operation based on the identified layout.

In another aspect, there is provided a method for identifying document layouts. The method may include: determining, based on a received document, a plurality of layout characteristics including a spatial position of one or more document features included in the received document and/or a numeric representation of the one or more document features included in the received document. The method also includes generating an aggregated similarity score by at least comparing the plurality of layout characteristics to a first plurality of predefined layout characteristics of a first predefined layout of a plurality of predefined layouts. The first plurality of predefined layout characteristics includes an average spatial position of the one or more document features included in a plurality of sample documents having the first predefined layout and/or an average numeric representation of the one or more document features included in the plurality of sample documents having the first predefined layout. The method also includes identifying a layout of the received document as the first predefined layout of the plurality of predefined layouts based on the aggregated similarity score meeting a threshold score. The method also includes performing a document processing operation based on the identified layout.

In another aspect, there is provided a computer program product that includes a non-transitory computer readable storage medium. The non-transitory computer-readable storage medium may include program code that causes operations when executed by at least one data processor. The operations may include: determining, based on a received document, a plurality of layout characteristics including a spatial position of one or more document features included in the received document and/or a numeric representation of the one or more document features included in the received document. The operations may also include generating an aggregated similarity score by at least comparing the plurality of layout characteristics to a first plurality of predefined layout characteristics of a first predefined layout of a plurality of predefined layouts. The first plurality of predefined layout characteristics includes an average spatial position of the one or more document features included in a plurality of sample documents having the first predefined layout and/or an average numeric representation of the one or more document features included in the plurality of sample documents having the first predefined layout. The operations also include identifying a layout of the received document as the first predefined layout of the plurality of predefined layouts based on the aggregated similarity score meeting a threshold score. The operations also include performing a document processing operation based on the identified layout.

In some variations of the methods, systems, and non-transitory computer readable media, one or more of the following features can optionally be included in any feasible combination. In some aspects, the one or more document features includes a document header field, a table header field, and a logo. The spatial position includes a spatial position of the document header field and a spatial position of the table header field. The numeric representation includes a numeric representation of the logo.

In some aspects, the one or more document features further includes vendor information. The plurality of layout characteristics further includes an identifier associated with the vendor information.

In some aspects, the spatial position includes spatial coordinates.

In some aspects, the first plurality of predefined layout characteristics further includes a spatial spread associated with the average spatial position.

In some aspects, the aggregated similarity score meets the threshold score when the aggregated similarity score is less than the threshold score.

In some aspects, the aggregated similarity score is further generated by at least: generating a similarity score for each of the plurality of layout characteristics and aggregating the similarity score generated for each of the plurality of layout characteristics.

In some aspects, the average spatial position of the first plurality of predefined layout characteristics is generated by at least: extracting, from the plurality of sample documents, the one or more document features, determining a spatial position of the one or more extracted document features in each of the plurality of sample documents, and averaging the spatial position of the one or more extracted document features in each of the plurality of sample documents.

In some aspects, the aggregated similarity score is further generated by at least comparing, prior to comparing the plurality of layout characteristics to the first plurality of predefined layout characteristics, the plurality of layout characteristics to a second plurality of predefined layout characteristics of a second predefined layout of the plurality of predefined layouts. The second plurality of predefined layout characteristics includes an average spatial position of the one or more document features included in a plurality of sample documents having the second predefined layout and/or an average numeric representation of the one or more document features included in the plurality of sample documents having the second predefined layout. The second predefined layout has a lower execution priority than the first predefined layout.

In some aspects, the document processing operation includes at least one of applying a dedicated extraction model to the received document based on the identified layout, applying correction logic to the received document based on the identified layout to correct a value extracted from the received document, and applying a custom extraction model based on the identified layout.

Implementations of the current subject matter can include methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including, for example, to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to a machine learning data processing pipeline, it should be readily understood that such features are not intended to be limiting. The claims that follow this disclosure are intended to define the scope of the protected subject matter.

## DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,

FIG. 1 depicts a system diagram illustrating a document layout identification system, in accordance with some example embodiments;

FIG. 2 depicts an example document, in accordance with some example embodiments;

FIG. 3 depicts an example process for generating a predefined layout, in accordance with some example embodiments;

FIG. 4 depicts an example process for identifying a document layout, in accordance with some example embodiments;

FIG. 5 depicts a flowchart illustrating an example of a process for multi-mode identification a document layout, in accordance with some example embodiments; and

FIG. 6 depicts a block diagram illustrating a computing system, in accordance with some example embodiments.

When practical, similar reference numbers denote similar structures, features, or elements.

## DETAILED DESCRIPTION

A software application, such as an enterprise software application, may be used to extract logical entities or document features from scanned documents (e.g., invoices, purchase orders, order confirmations, payment advice). The document features may include header information, such as a document date, a sender name, a sender bank account, a sender tax identifier, a total amount, etc. and line item information included in tables with fields, such as line item text, line item quantity or line item amount.

Generally to extract such information, after uploading a scanned document, the document is first processed with an optical character recognition (OCR) solution to yield the text on the document. After, one or more modules of the software application can extract some or all document features based on the image and/or the text information from the OCR step. The modules can contain rule-based extraction heuristics, neural network-based extraction models such as DocumentReader, Chargrid or Charmer, or post-processing logic such as sender address harmonization and matching. A message-based orchestration layer of the software application controls the execution of the different modules, merges the results of the different modules, and persists the results so they can finally be retrieved by a user or an embedding solution.

Generally, neural network-based models deployed in the software application are document-specific, global models. Thus, deployment of the models relies on accurate identification of a document type or document layout. The models are trained using a large corpus of documents of the same type, but with a great variety of layouts, to learn to extract the document features from arbitrary documents. In this context, two documents share the same layout if all present header fields are at the same location and if they have the same set of columns in the table (incl. the order of the columns). However, some header fields may be missing from documents or the location of header fields may vary (e.g., the header fields may be shifted, distorted, and/or rotated) based on the scanning of the document. Moreover, in some instances, some header fields that are below a table, such as the gross amount, may have different absolute coordinates due to the different number of line items in the table. At least because of the variability in header fields, scanning of the documents, and/or the like, it can be difficult for conventional software applications to accurately determine that two documents share the same layout.

To address such issues, some software applications rely only on extracted text from the documents to deduce a set of rules to identify document layouts. However, these rules are often either not specific enough to reliably distinguish similar, but different layouts or they are not robust enough to small variations in the layout, as noted above.

In other approaches solely relying on the extracted text, such software applications may encode all text of a document into one vector representation, which then can be used to cluster and determine similarities between documents. Using this approach depends only on the content of a document. However, such approaches are limited and may result in inaccurate document layout determinations-documents related to the same subject, but received from different vendors, may be clustered, whereas documents related to the same subject, but received from the same vendor, may not be considered to be the same layout.

Other layout clustering approaches only rely on the scanned document and process the scanned document as an image. These approaches convert the image of the scanned document into a numeric representation in a latent space. While these approaches are generally useful to cluster a set of documents, such approaches are not sufficiently accurate or precise to identify document layouts underlying layout-specific extraction models or logic. For example, these approaches may be particularly susceptible to provide inaccurate document layouts when there are variations in a quantity of line items, and/or the like.

Unlike such conventional approaches, the document layout identification system described herein accurately and consistently assigns documents, such as business documents, to a set of pre-defined document layouts using different document modes or layout characteristics, such as spatial information of document header fields, spatial information and/or text information of table header fields, a numeric representation of a sender logo, harmonized sender or vendor information, and/or the like. Thus, the document layout identification system described herein reliably provides accurate document layouts so that custom-trained models can be properly applied to the documents. The document layout identification system additionally and/or alternatively allows for the identification of a wide variety of document layouts.

For example, the document layout identification system consistent with embodiments of the current subject matter may receive a document and determine, based on the document, a plurality of document modes or layout characteristics. The document layout identification system may compare the layout characteristics of the received document to predefined layout characteristics of a plurality of predefined layouts (e.g., predefined layouts) to determine a similarity score for each of the layout characteristics. The similarity score for each of the layout characteristics may be aggregated to generate an aggregated similarity score. The document layout identification system may identify a layout of the received document as one of the pre-defined layouts based on the aggregated similarity score meeting a threshold score. The identified layout may be used for performing one or more document processing operations. For example, as noted, a tailored model may be applied to the document based on the identified layout.

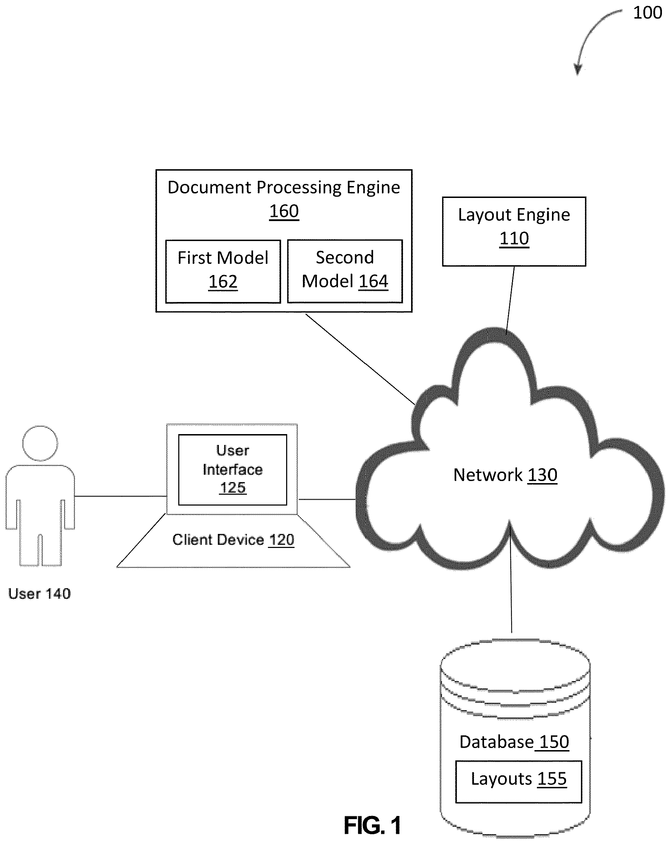

FIG. 1 depicts a system diagram illustrating a document layout identification system 100, in accordance with some example embodiments. Referring to FIG. 1, the document layout identification system 100 may include a layout engine 110, a database 150, and a client device 120. The document layout identification system 100 may additionally and/or alternatively include or be coupled to a document processing engine 160, which may include one or more machine learning models or other models for processing a document based on a document layout identified by the layout engine 110. The document processing engine 160 may include a first model 162, a second model 164, and/or the like for processing one or more documents, as described herein.

As shown in FIG. 1, the layout engine 110, the database 150, the client device 120, and the document processing engine 160 may be communicatively coupled via a network 130. The network 130 may be any wired and/or wireless network including, for example, a public land mobile network (PLMN), a wide area network (WAN), a local area network (LAN), a virtual local area network (VLAN), the Internet, and/or the like. As noted, the layout engine 110 may accurately identify a document layout of a document, such as a document received via the client device 120. The layout engine 110 may include at least one data processor and at least one memory storing instructions, which when executed by the at least one data processor cause one or more operations as described herein.

The client device 120 may be a processor-based device including, for example, a smartphone, a tablet computer, a wearable apparatus, a virtual assistant, an Internet-of-Things (IoT) appliance, and/or the like. The client device 120 may interact with the layout engine 110 to generate one or more predefined layouts 155, which are stored in the database 150. As shown in FIG. 1, the layout engine 110 may be associated with a user interface 125 of the client device 120. The user interface 125 may receive, from a user 140 at the client device 120, one or more inputs including one or more documents. The one or more documents may be original documents and/or scanned images of the documents. The one or more documents may include invoices, purchase orders, order confirmations, payment advice, and/or the like. The one or more documents may be received from the user 140. The one or more documents may be associated with a particular sender or vendor such that the one or more documents received from the particular sender or vendor have a document layout. Additionally and/or alternatively, the one or more documents may be associated with a particular transaction such that the one or more documents associated with the particular transaction and vendor.

In some embodiments, the one or more inputs additionally and/or alternatively include a selection of one or more fields within the one or more documents that may be mandatory for certain document layouts, as described in more detail below. Additionally and/or alternatively, the layout engine 110 may communicate with the user interface 125 to display, via the user interface 125 the received document, the identified document layout, and/or the like.

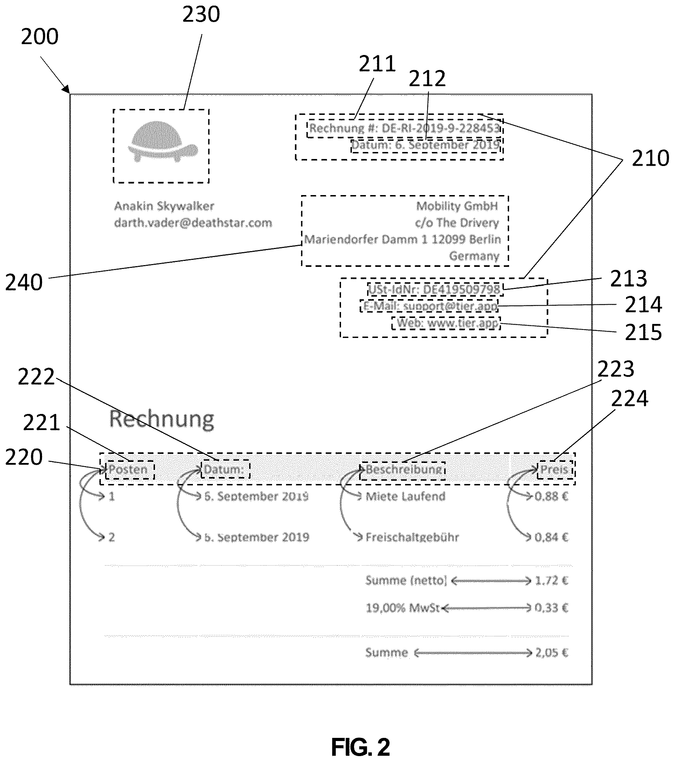

FIG. 2 depicts an example document 200 that may be received via the user interface 125, in accordance with some example embodiments. The document 200 may include one or more document features, such as one or more document header fields 210, one or more table header fields 220, one or more logos 230 (e.g., a logo of the sender or vendor associated with the document 200), and/or vendor information 240, among other document features. The one or more document features may be extracted via one or more extraction methods, such as OCR.

Referring to FIG. 2, the one or more document header fields 210 may include text associated with a particular position within the document 200. For example, the one or more document header fields 210 may generally be positioned at or near a top of the document 200. However, the one or more document header fields 210 may additionally and/or alternatively be positioned at other locations within the document 200 such as below a table, and/or the like. In some embodiments, the one or more document header fields 210 may each be positioned at and/or associated with a particular spatial position within the document 200. The one or more document header fields 210 may include a document number 211, a date 212, a tax identification number 213, an e-mail address 214, a website 215, and/or the like. Documents including a similar layout as the document 200 would include the same document header fields 210 and/or the same or similar spatial positions of the document header fields 210. The document 200 may include one or more values (e.g., alphabetic, numeric, alphanumeric, etc.) associated with each of the one or more document header fields 210.

The one or more table header fields 220 may include text associated with a header of a column in a table presented within the document 200. The one or more table header fields 220 may be associated with a particular value and/or a particular position within the table and/or the document 200. For example, each of the one or more table header fields 220 may be associated with a particular column of the table such that documents having a similar layout as the document 200 would include the same table header fields 220 and/or the table header fields 220 in the same or similar spatial position. As an example, the one or more table header fields 220 includes an item line-item number 221, a date 222 associated with the line-item number 221, a corresponding description 223, a corresponding price 224, and/or the like.

Referring back to FIG. 2, the one or more document features of the document 200 may include one or more logos 230. The one or more logos 230 may be associated with the sender or vendor, and/or the like. The one or more logos 230 may include an image and/or text. The one or more logos 230 may be associated with a particular spatial position within the document 200. As an example, in the document 200, the logo 230 is positioned in the upper left corner of the document 200. In this example, other documents having the same layout as the document 200 would include a logo in the same or similar spatial position as the logo 230 shown in the document 200.

Again referring to FIG. 2, the one or more document features of the document 200 may include the vendor information 240. The vendor information 240 may be associated with the vendor or sender of the document 200. The vendor information 240 may be associated with a recipient of the document 200. The vendor information 240 may include a name, address, geographic location, telephone number, and/or the like associated with the vendor or sender of the document 200. The vendor information 240 may be associated with a particular spatial position within the document 200. Other documents having the same layout as the document 200 would include vendor information in the same or similar spatial position as the vendor information 240 shown in the document 200.

Referring back to FIG. 1, the database 150 may store a plurality of predefined layouts 155. The layout engine 110 may compare a received document, such as the document 200 to one or more predefined layouts of the plurality of predefined layouts 155 to identify a layout of the received document as one of the plurality of predefined layouts 155. Each of the plurality of predefined layouts 155 may include a plurality of layout characteristics, which may also be referred to herein as a plurality of modes of the document. The plurality of layout characteristics may define each layout of the plurality of predefined layouts 155 and may distinguish one layout from another. The plurality of layout characteristics may each be associated with a corresponding document feature extracted from a document. For example, the plurality of layout characteristics may include a spatial position and/or value of the one or more document header fields 210, a spatial position and/or value of the one or more table header fields 220, a numeric representation of the one or more logos 230, harmonized vendor information associated with the vendor information 240 (see FIG. 2), and/or the like.

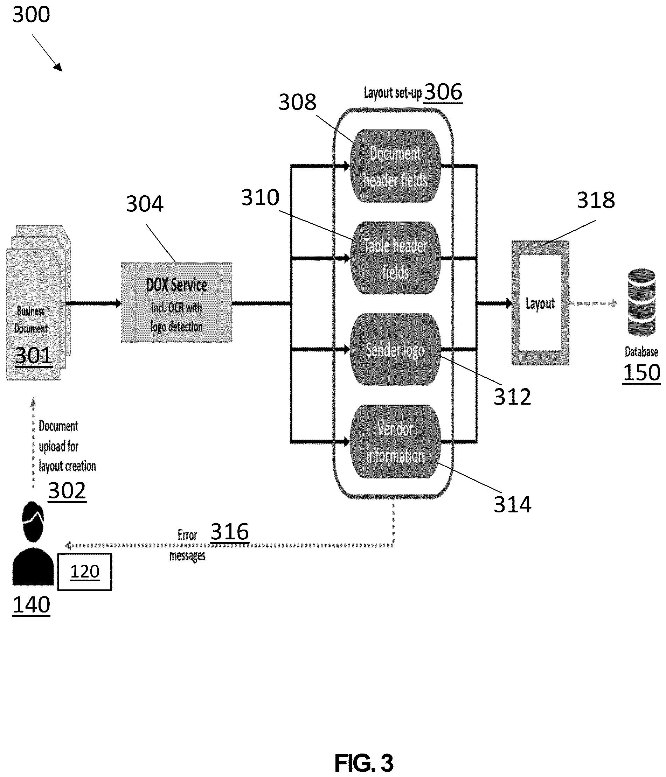

Each predefined layout of the plurality of predefined layouts 155 may be generated based on a plurality of sample documents, such as the document 200, having the same layout and stored in the database 150 for use by the layout engine 110 in identifying a document layout of a document. FIG. 3 illustrates an example process 300 for generating each predefined layout of the plurality of predefined layouts 155, in accordance with some example embodiments.

At 302, the layout engine 110 receives a document 301. For example, the user 140 may upload the document 301 via the client device 120 for creation of a predefined layout. The document 301 may, for example, include the document 200. In some embodiments, the document 301 includes a plurality of sample documents having the same layout and/or the same document type. This allows for creation of a predefined layout based on the document layout of the plurality of sample documents.

At 304, the layout engine 110 and/or a first model 162 of the document processing engine 160 may process the document 301 (e.g., the plurality of sample documents). The first model 162 may be a global model such that the first model 162 is generally applied to all documents in all supported languages. Additionally and/or alternatively the first model 162 may be applied to all documents of a particular document type (e.g., invoice, purchase order, and/or the like) in all supported languages. The first model 162 may be a neural network, or another machine learning model. The first model 162 may be trained, based on a plurality of documents, such as annotated documents, to extract, from the document 301, one or more document features, such as key (e.g., header) fields, value fields that include, a spatial position (e.g., spatial coordinates) of the key fields and/or the value fields, one or more logos, vendor information, and/or the like. The key fields may include one or more document header fields and/or the one or more table header fields described herein. The value fields may include the value (e.g., text) corresponding to each of the key fields. In some embodiments, the key fields correspond to the value fields. In other words, the key fields define the meaning of values (e.g. "PO number" is the key to a value, such as a purchase order number printed next to the PO number).

The first model 162 may additionally and/or alternatively be trained to identify a position of a logo within the document 301 and/or generate a numeric representation of the identified logo. The first model 162 may additionally and/or alternatively be trained to extract vendor information, a spatial position of the vendor information, and/or harmonize the vendor information by, for example, determining an identifier associated with the vendor information. Thus the first model 162 may yield the content and the positions of various value fields (e.g., the one or more document header fields 210, the one or more table header fields 220, the one or more logos 230 on the documents, the vendor information 240, etc.).

At 306, the predefined layout 155 corresponding to the document 301 (e.g., the plurality of sample documents) may be generated. Via the user interface 125 of the client device 120, the user 140 may define mandatory fields within the document 301. For example, the layout engine 110 may receive a selection of one or more mandatory fields based on the fields (e.g., the key fields) extracted by the first model 162. The mandatory fields may include one or more mandatory document header fields, one or more mandatory table header fields, and/or the like. In some embodiments, all table header fields are considered to be mandatory. The mandatory fields may indicate the fields that belong to the document layout of the document 301 such that in all documents having the document layout, the mandatory fields are always located at a particular spatial position in the document 301 and have the same name. In some embodiments, at least some fields may belong to a document layout, but are not considered to be and/or selected as a mandatory field. For example, all documents in a predefined layout may include a particular field, such as a purchase order number. However, in some documents having the predefined layout, the purchase order number may be missing or otherwise unavailable. In this example, the purchase order number field may not be considered to be a mandatory field. As another example, a due date may be considered a mandatory field because the due date always appears in documents having the predefined layout and at the same spatial position within the documents having the predefined layout.

Additionally and/or alternatively, the layout engine 110 may receive, via the user interface 125 of the client device 120, a selection of a user-defined name for the predefined layout, an execution priority of the predefined layout used during layout identification (described in more detail below), a threshold score (described in more detail below) indicating a similarity between a document and a predefined layout, a textual description, or other metadata. In some embodiments, the threshold score may alternatively be a predefined value rather than a user-configurable value. In some embodiments, the metadata is used for maintenance of the predefined layout and/or storage of the predefined layout in the database 150, and may not impact identification of the layout of a document. The metadata may additionally and/or alternatively be associated with the predefined layout 155 and stored in the database 150 for later use in triggering the execution of a particular model (e.g., the second model 164) or other document processing actions based on the identification of the document layout of a document.

Accordingly, the layout engine 110 may process the one or more document features extracted by the first model 162. The layout engine 110 may determine one or more layout characteristics or modes based on the extracted one or more document features. As described herein, the one or more layout characteristics may define the predefined layout 155. The one or more layout characteristics of the predefined layout 155 may be stored with the metadata received by the layout engine 110, in the database 150.

Referring to FIG. 3, the layout engine 110 determines the one or more predefined layout characteristics of a predefined layout 155 based at least on one or more document features, such as the document header fields, the table header fields, the logo, the vendor information, and/or the like, included in the document 301 (e.g., the plurality of sample documents).

At 308, the layout engine 110 determines the predefined layout characteristic associated with the one or more document header fields (e.g., the one or more document header fields 210) included in the plurality of sample documents. The one or more document header fields may include a plurality of document header field types corresponding to each document header field. Based on the extracted information from the first model 162, the layout engine 110 may determine a spatial position of each document header field type of the one or more document header fields. The spatial position may include a spatial coordinate (e.g., an x-coordinate and a y-coordinate). The spatial coordinate may correspond to a location of a corner, such as an upper-left corner, of the associated document header field type. The layout engine 110 may determine an average special position for each document header field of the one or more document header fields. To determine the average spatial position for each document header field, the layout engine 110 determines an average x-coordinate and an average y-coordinate associated with each document header field across all sample documents (e.g., the document 301) of the plurality of sample documents received to generate the predefined layout 155.

Additionally and/or alternatively, the layout engine 110 may determine a spatial spread associated with the average spatial position for each document header field of the one or more document header fields. The spatial spread may include a standard deviation associated with the average spatial position of each document header field across the plurality of sample documents.

In some embodiments, the layout engine 110 implements a predefined spatial spread as the spatial spread associated with the average spatial position when there are too few documents of the plurality of sample documents to determine the spatial spread. For example, the layout engine 110 may use a predefined spatial spread based on a quantity of the sample documents failing to meet a threshold quantity (e.g., 3 to 5 sample documents, 5 to 7 sample documents, 7 to 10 sample documents, and/or the like).

In some embodiments, the layout engine 110 determines to exclude a document header field from the predefined layout 155 when the determined spatial spread associated with the document header field meets (e.g., is greater than or equal to) a threshold spread. As an example, the total amount document header field may have a large spatial spread when its position is anchored to the table included in the plurality of sample documents, and thus the spatial position of the total amount document header field varies depending on a quantity of line items in the table. If the layout engine 110 determines the spatial spread for a document header field meets the threshold spread, the layout engine 110 thus may exclude the document header field from the predefined layout 155, since the spatial position may vary by a large degree between different documents. However, in some instances, the layout engine 110 determines the spatial spread for a mandatory document header field meets the threshold spread. In such instances, since the document header field is considered to be mandatory, the layout engine 110 returns an error message, at 316, for display at the client device 120 and/or aborts the set-up of the predefined layout 155.

Additionally and/or alternatively, the layout engine 110 may determine that too many document header fields in the plurality of sample documents received during generation of the predefined layout 155 have a spatial spread that meets the threshold spread. In other words, the layout engine 110 determines a quantity of document header fields having a spatial spread meeting the threshold spread meets a threshold quantity (e.g., 3, 5, 10, etc.). In such instances, the layout engine 110 returns an error message, at 316, for display at the client device 120 and/or aborts the set-up of the predefined layout 155, since the predefined layout 155 would have an insufficient quantity of remaining document header fields to accurately define the predefined layout 155.

The layout engine 110 may store, at 318, the average spatial position and/or the associated spatial spread for each document header field as one or more predefined layout characteristics defining a predefined layout (e.g., the predefined layout 155). The layout engine 110 may store the average spatial position and the associated spatial spread for each document header field along with the associated metadata, in the database 150, as part of the predefined layout 155. In some embodiments, the layout engine 110 determines the average spatial position and the associated spatial spread for each of the key fields and value fields. The layout engine 110 may store the average spatial position, the associated spatial spread, and/or metadata (e.g., the field type) for each key field and/or value field as part of the predefined layout 155 in the database 150.

At 310, the layout engine 110 determines the predefined layout characteristic associated with the one or more table header fields (e.g., the one or more table header fields 220) included in the plurality of sample documents. The one or more table header fields may include a plurality of columns in a table in each of the plurality of sample documents. Based on the extracted information from the first model 162, the layout engine 110 may determine a spatial position of each table header field of the one or more table header fields. The spatial position may include a spatial coordinate (e.g., an x-coordinate and a y-coordinate). The spatial coordinate may correspond to a location of a corner, such as an upper-left corner, of the associated table header field. The layout engine 110 may determine an average special position for each table header field of the one or more table header fields. To determine the average spatial position for each table header field, the layout engine 110 determines an average x-coordinate and an average y-coordinate associated with each type of table header field across all sample documents (e.g., the document 301) of the plurality of sample documents received to generate the predefined layout 155.

Additionally and/or alternatively, the layout engine 110 may determine a spatial spread associated with the average spatial position for each table header field of the one or more table header fields. The spatial spread may include a standard deviation associated with the average spatial position of each table header field across the plurality of sample documents.

In some embodiments, the layout engine 110 implements a predefined spatial spread as the spatial spread associated with the average spatial position when there are too few documents of the plurality of sample documents to determine the spatial spread. For example, the layout engine 110 may use a predefined spatial spread based on a quantity of the sample documents failing to meet a threshold quantity (e.g., 3 to 5 sample documents, 5 to 7 sample documents, 7 to 10 sample documents, and/or the like).

As noted, the layout engine 110 may consider all table header fields to be mandatory fields. Accordingly, in some instances, the layout engine 110 determines the spatial spread for a table header field meets (e.g., is greater than or equal to) the threshold spread. In such instances, since the table header field is considered to be mandatory, the layout engine 110 returns an error message, at 316, for display at the client device 120 and/or aborts the set-up of the predefined layout 155.

Additionally and/or alternatively, the layout engine 110 may determine that too many table header fields in the plurality of sample documents received during generation of the predefined layout 155 have a spatial spread that meets the threshold spread. In other words, the layout engine 110 determines a quantity of table header fields having a spatial spread meeting the threshold spread meets a threshold quantity (e.g., 3, 5, 10, etc.). In such instances, the layout engine 110 returns an error message, at 316, for display at the client device 120 and/or aborts the set-up of the predefined layout 155, since the predefined layout 155 would have an insufficient quantity of remaining table header fields to accurately define the predefined layout 155.

The layout engine 110 may store, at 318, the average spatial position and/or the associated spatial spread for each table header field as one or more predefined layout characteristics defining the predefined layout (e.g., the predefined layout 155). The layout engine 110 may store the average spatial position and the associated spatial spread for each table header field along with the associated metadata, in the database 150, as part of the predefined layout 155. In some embodiments, the layout engine 110 also stores the associated values of each of the table header fields with the associated average spatial position and/or associated spatial spread in the database 150 as part of the predefined layout 155.

At 312, the layout engine 110 determines the predefined layout characteristic associated with a logo (e.g., the one or more logos 230) included in the plurality of sample documents. The logo may be an image representing a logo of the vendor or sender company. Based on the extracted information from the first model 162 (e.g., coordinates of a bounding box of the logo), the layout engine 110 may determine a numeric representation of the logo. In some embodiments, the layout engine 110 communicates with a pre-trained machine learning model, such as a pre-trained image neural network or other neural network trained to determine a numeric representation in a latent space. The numeric representation may be an image embedding vector that includes one or more pixel values, a coordinate associated with the one or more pixel values, one or more extracted image features, and/or the like. Thus, the numeric representation preserves the characteristics of the logo (e.g., the image of the logo), while exploiting the latent space.

To determine the predefined layout characteristic of the predefined layout 155 associated with the logo, the layout engine 110 determines the numeric representation of the logo in each of the sample documents (e.g., the document 301) received by the layout engine 110 during generation of the predefined layout 155. The layout engine 110 determines an average numeric representation across all of the plurality of sample documents based on the numeric representation determined for the logo included in each sample document.

While in many instances, the logo is the same or similar and/or is located at the same or similar spatial position within each sample document, in some instances, there is a significant variation in the logo in at least one sample document of the plurality of sample documents. To reduce or eliminate the impact of such significant variation, the layout engine 110 determines a difference between each of the determined numeric representations. For example, the layout engine 110 may determine an $L_2$ norm between each of the numeric representations. If the layout engine 110 determines the difference between the numeric representations for any two logos meets (e.g., is greater than or equal to) a predefined threshold difference, the layout engine 110 returns an error message, at 316, for display at the client device 120 and/or aborts the set-up of the predefined layout 155. If the layout engine 110 determines the difference between the numeric representations for any two logos is less than a predefined threshold difference, the layout engine 110 determines the average numeric representation of the logo and stores, at 318, the numeric representation as a predefined layout characteristic of the predefined layout 155 stored in the database 150.

At 314, the layout engine 110 determines the predefined layout characteristic associated with the vendor information (e.g., the vendor information 240) included in the plurality of sample documents. The vendor information may include information about the vendor of the document 301 (e.g., the plurality of sample documents). Based on the vendor information for each sample document, the layout engine 110 determines harmonized vendor information. The harmonized vendor information may include an identifier, such as a technical identifier or customer number associated with the vendor. The harmonized vendor information should be the same across all sample documents. Thus, the layout engine 110 determines the harmonized vendor information and, at 318, stores the harmonized vendor information as the predefined layout characteristic of the predefined layout 155 in the database 150 when the harmonized vendor information is the same across each of the plurality of sample documents. If the layout engine 110 determines the harmonized vendor information for any two sample documents of the plurality of sample documents is not the same, the layout engine 110 returns an error message, at 316, for display at the client device 120 and/or aborts the set-up of the predefined layout 155. Accordingly, a plurality of predefined layouts 155 may be generated and stored in the database 150.

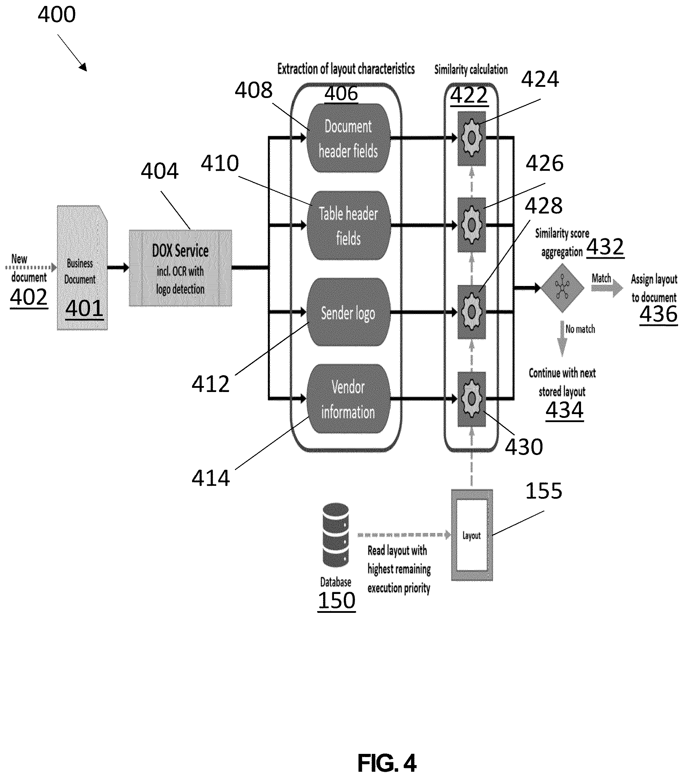

Consistent with implementations of the current subject matter, the layout engine 110 may process documents received via the client device 120 to accurately and efficiently identify a document layout based on the plurality of predefined layouts 155 stored in the database 150. FIG. 4 illustrates an example process 400 for identifying the document layout, in accordance with some example embodiments.

Referring to FIG. 4, at 402, the layout engine 110 receives a document 401. For example, the user 140 may upload the document 401 via the client device 120 for processing. In other embodiments, the layout engine 110 may receive the document 401 from another software application, system, and/or the like. The document 401 may, for example, include the document 200 and/or one or more aspects of the document 200.

As described herein, the document 401 may include one or more document features, such as one or more document header fields, one or more table header fields, one or more logos, vendor information, and/or the like. At 404, the layout engine 110 and/or the first model 162 of the document processing engine 160 may process the received document 401. As noted, the layout engine 110 (e.g., via the model 162) may extract the one or more document features from the received document 401.

At 406, the layout engine 110 (e.g., via the model 162) may determine a plurality of layout characteristics defining a document layout of the received document. The plurality of layout characteristics may include a spatial position of one or more document features included in the received document, a numeric representation of the one or more document features included in the received document 401, an identifier representing vendor information included in the received document 401, and/or the like. Thus, the plurality of layout characteristics define the layout of the received document 401.

As an example referring to FIG. 4, at 408, the layout engine 110 determines a first layout characteristic of a plurality of layout characteristics defining the document layout of the received document 401. The first layout characteristic may include a spatial position of one or more document header fields, such as one or more mandatory document header fields, and/or a value of the one or more document header fields included in the received document 401. For example, the layout engine 110 may determine one or more spatial coordinates (e.g., an x-coordinate and/or a y-coordinate) of the one or more document header fields. The one or more spatial coordinates may be associated with a corner of the one or more document header fields, such as an upper-left corner of the one or more document header fields.

At 410, the layout engine 110 determines a second layout characteristic of the plurality of layout characteristics defining the document layout of the received document 401. The second layout characteristic may include a spatial position of one or more table header fields and/or a value (e.g., a text value) of the one or more table header fields included in the received document 401. For example, the layout engine 110 may determine one or more spatial coordinates (e.g., an x-coordinate and/or a y-coordinate) of the one or more table header fields. The one or more spatial coordinates may be associated with a corner of the one or more table header fields, such as an upper-left corner of the one or more table header fields.

At 412, the layout engine 110 determines a third layout characteristic of the plurality of layout characteristics defining the document layout of the received document 401. The third layout characteristic may include a numeric representation of a logo included in the received document 401. For example, the layout engine 110 may communicate with the image neural network to generate a numeric vector representation of the image of the logo included in the received document 401.

At 414, the layout engine 110 determines a fourth layout characteristic of the plurality of layout characteristics defining the document layout of the received document 401. The fourth layout characteristic may include harmonized vendor information. The harmonized vendor information may include an identifier representing the vendor information.

At 422, the layout engine 110 iteratively compares the plurality of layout characteristics determined based on the received document 401 to a plurality of predefined layout characteristics of one or more predefined layouts of the plurality of predefined layouts 155 (e.g., generated via the process 300) stored in the database 150. The layout engine 110 may iteratively compare the plurality of layout characteristics determined based on the received document 401 to the plurality of predefined layout characteristics of the plurality of predefined layouts 155 stored in the database 150 by descending execution priority, starting with the predefined layout having the highest execution priority, which as noted may be assigned to each predefined layout 155 during generation of the predefined layout 155.

The layout engine 110 then determines a similarity score for each of the plurality of layout characteristics of the received document 401. In other words, the layout engine 110 determines a similarity score for each of the plurality of layout characteristics by iteratively comparing the plurality of layout characteristics of the received document to the plurality of predefined layout characteristics of a plurality of predefined layouts. For example, the layout engine 110 may determine each similarity score by iteratively comparing the plurality of layout characteristics to the plurality of predefined layout characteristics of the plurality of predefined layouts based on an execution priority order that may be assigned to each of the plurality of predefined layouts. The layout engine 110 may determine the aggregated similarity score based on a comparison between the determined plurality of layout characteristics and the plurality of predefined layout characteristics of a first predefined layout having a higher execution priority prior to determining the aggregated similarity score based on a comparison between the determined plurality of layout characteristics and the plurality of predefined layout characteristics of a second predefined layout having a lower execution priority order.

At 424, the layout engine 110 determines a first similarity score representing a similarity between the one or more layout characteristics (e.g., the spatial position, the value, and/or the like) associated with the one or more document header field document features included in the received document 401 and the corresponding one or more predefined layout characteristics (e.g., the average spatial position of the one or more document header fields, the spatial spread associated with the average spatial position, the value of the one or more document header fields, and/or the like) of a predefined layout of the plurality of predefined layouts 155.

To determine the first similarity score, the layout engine determines a difference between the stored spatial position (e.g., the first layout characteristic) of each document header field in the received document 401 and the stored spatial position (e.g., a first predefined layout characteristic) of the corresponding document header field associated with the predefined layout. The layout engine 110 may determine a distance metric, such as a Euclidean distance, representing the difference between the spatial position of each document header field in the received document 401 and each corresponding document header field associated with the predefined layout. The layout engine 110 divides the distance by the stored spatial spread associated with the spatial position of the document header field associated with the predefined layout and feeds it into a loss function. A small loss indicates a high similarity, while a large loss represents dissimilarity. As an example, the layout engine 110 may determine the similarity score for each document header field using Equation 1 below:

$$\text{Equation 1: similarity}(d_{\text{relative}}) = -\text{loss}(d_{\text{relative}}) = -\left(\frac{d_{\text{Euclidean}}}{\sigma_{\text{spatial spread}}}\right)^2$$

where similarity($d_{\text{relative}}$) represents the similarity score for each document header field, - loss($d_{\text{relative}}$) represents the loss function, $d_{\text{Euclidian}}$ represents the determined distance, and $\sigma_{\text{spatial spread}}$ represents the associated spatial spread. While Equation 1 is a quadratic function, the equation may include a monotonic real function including step-wise functions.

In some embodiments, if the layout engine 110 determines a mandatory document header field associated with the predefine layout is not found on the received document 401, the layout engine 110 assigns a large predefined negative value as contribution. The layout engine 110 determines the first similarity score as a sum of the similarity scores determined for each document header field. Thus, a missing mandatory document header field from the received document 401 may indicate that the layout of the received document 401 is not the predefined layout against which the received document 401 is currently being compared.

At 426, the layout engine 110 determines a second similarity score representing a similarity between the one or more layout characteristics (e.g., the spatial position, the value, and/or the like) associated with the one or more table header field document features included in the received document 401 and the corresponding one or more predefined layout characteristics (e.g., the average spatial position of the one or more table header fields, the spatial spread associated with the average spatial position, the value of the one or more table header fields, and/or the like) of the predefined layout of the plurality of predefined layouts 155.

To determine the second similarity score, the layout engine 110 determines a difference between the stored spatial position (e.g., the second layout characteristic) of each table header field in the received document 401 and the stored spatial position (e.g., a second predefined layout characteristic) of the corresponding table header field associated with the predefined layout. The layout engine 110 may determine a distance metric, such as a Euclidean distance, representing the difference between the spatial position of each table header field in the received document 401 and each corresponding table header field associated with the predefined layout. The layout engine 110 divides the distance by the stored spatial spread associated with the spatial position of the table header field associated with the predefined layout and feeds it into a loss function. A small loss indicates a high similarity, while a large loss represents dissimilarity. As an example, the layout engine 110 may determine the similarity score for each table header field using Equation 2 below:

$$\text{Equation 2: similarity}(d_{\text{relative}}) = -\text{loss}(d_{\text{relative}}) = -\left(\frac{d_{\text{Euclidean}}}{\sigma_{\text{spatial spread}}}\right)^2$$

where similarity($d_{\text{relative}}$) represents the similarity score for each table header field, -loss($d_{\text{relative}}$) represents the loss function, $d_{\text{Euclidian}}$ represents the determined distance, and $\sigma_{\text{spatial spread}}$ represents the associated spatial spread. While Equation 2 is a quadratic function, the equation may include a monotonic real function including step-wise functions.

In some embodiments, if the layout engine 110 determines any table header field associated with the predefine layout is not found on the received document 401, the layout engine 110 assigns a large predefined negative value as contribution, since each table header field may be considered as mandatory. Additionally and/or alternatively, if the layout engine 110 determines any value (e.g., text value) corresponding to the table header field associated with the predefine layout is not found on the received document 401, the layout engine 110 assigns a large predefined negative value as contribution. The layout engine 110 determines the second similarity score as a sum of the similarity scores determined for each table header field. Thus, a missing table header field from the received document 401 and/or a mismatched text value of the table header field from the received document 401 may indicate that the layout of the received document 401 is not the predefined layout against which the received document 401 is currently being compared.

At 428, the layout engine 110 determines a third similarity score representing a similarity between the one or more layout characteristics (e.g., the numeric representation, and/or the like) associated with the one or more logos included in the received document 401 and the corresponding one or more predefined layout characteristics (e.g., the average numeric representation, and/or the like) of the predefined layout of the plurality of predefined layouts 155.

To determine the third similarity score, the layout engine 110 determines whether the received document 401 includes a logo (e.g., a sender or vendor logo) and the predefined layout includes a logo. Based at least on a determination that both the received document 401 and the predefined layout includes a logo, the layout engine 110 compares the numeric representation of the logo in the received document 401 to the average numeric representation of the predefined layout. The third similarity score in this instance may be determined based on the comparison using an $L_2$ norm, $L_1$ norm, cosine similarity, and/or the like.

In some embodiments, the layout engine 110 determines that the predefined layout does not include a logo. In this embodiment, the layout engine 110 assigns a similarity score contribution as zero. In other words, the third similarity score would not contribute to the aggregated similarity score.

In some embodiments, the layout engine 110 determines that the received document 401 does not include a logo while the predefined layout includes a logo. In this embodiment, the layout engine 110 determines the third similarity score to be a large predefined negative value. Thus, a predefined layout including a logo when the received document 401 does not include the logo may indicate that the layout of the received document 401 is not the predefined layout against which the received document 401 is currently being compared.

At 430, the layout engine 110 determines a fourth similarity score representing a similarity between the one or more layout characteristics (e.g., the identifier associated with the vendor information and/or the like) associated with the vendor information included in the received document 401 and the corresponding one or more predefined layout characteristics (e.g., the harmonized vendor information, the identifier associated with the vendor information and/or the like) of the predefined layout of the plurality of predefined layouts 155.

To determine the fourth similarity score, the layout engine 110 determines whether the received document 401 includes vendor information and the predefined layout includes vendor information. Based at least on a determination that both the received document 401 and the predefined layout includes vendor information, the layout engine 110 compares the identifier associated with the vendor information of the received document 401 to the identifier associated with the harmonized vendor information of the predefined layout. If the layout engine 110 determines the identifier associated with the vendor information of the received document 401 matches (e.g., is the same as) the identifier associated with the harmonized vendor information of the predefined layout, the layout engine 110 assigns a predefined positive value as the fourth similarity score. If the layout engine 110 determines the identifier associated with the vendor information of the received document 401 does not match (e.g., is not the same as) the identifier associated with the harmonized vendor information of the predefined layout, the layout engine 110 assigns a predefined negative value as the fourth similarity score.

In some embodiments, the layout engine 110 determines that the predefined layout does not include vendor information. In this embodiment, the layout engine 110 assigns a similarity score contribution as zero. In other words, the fourth similarity score would not contribute to the aggregated similarity score.

In some embodiments, the layout engine 110 determines that the received document 401 does not include vendor information while the predefined layout includes vendor information. In this embodiment, the layout engine 110 determines the fourth similarity score to be a large predefined negative value. Thus, a predefined layout including vendor information when the received document 401 does not include vendor information may indicate that the layout of the received document 401 is not the predefined layout against which the received document 401 is currently being compared.

In some embodiments, the layout engine 110 determines whether the predefined layout is the document layout of the received document 401 based on one or more of the first similarity score, the second similarity score, the third similarity score, and/or the fourth similarity score. In such embodiments, after determining whether the predefined layout is the document layout of the received document 401 based on at least one of the first similarity score, the second similarity score, the third similarity score, and/or the fourth similarity score, the layout engine 110 may not continue to determine a next one of the first similarity score, the second similarity score, the third similarity score, and/or the fourth similarity score.

Additionally and/or alternatively, the layout engine 110 determines whether the predefined layout is the document layout of the received document 401 based on an aggregated similarity score. Referring again to FIG. 4, at 432, the layout engine 110 generates an aggregated similarity score based at least on the first similarity score, the second similarity score, the third similarity score, and/or the fourth similarity score. The layout engine 110 determines the aggregated similarity score as a weighted sum of the first similarity score, the second similarity score, the third similarity score, and/or the fourth similarity score. Additionally and/or alternatively, the layout engine 110 determines the aggregated similarity score by applying hard-code rules, a logistic regression, a decision tree, a boosted decision tree-type algorithm, a neural network or other machine learning model, a support vector machine, and/or the like, to aggregate the first similarity score, the second similarity score, the third similarity score, and/or the fourth similarity score.

The layout engine 110 may compare the aggregated similarity score to a threshold score to determine whether the predefined layout is the document layout of the received document 401. The layout engine 110 may determine that the aggregated similarity score does not meet the threshold score (e.g., is greater than or equal to the threshold score). In this instance, at 434, the layout engine 110 may iteratively compare the plurality of layout characteristics of the received document 401 to a next one of the predefined layouts in the plurality of predefined layouts 155, such as the next one in the priority execution order. Alternatively, the layout engine 110 may determine that the aggregated similarity score meets the threshold score (e.g., is less than the threshold score). In this instance, at 436, the layout engine 110 determines the predefined layout is the document layout of the received document 401. If no predefined layouts remain in the plurality of predefined layouts 155 for identification, the layout engine 110 labels the received document as an "unknown layout". Accordingly, the layout engine 110 may accurately assign a document layout to a received document. In other embodiments, the layout engine 110 determines the aggregated similarity score does not meet the threshold score when the aggregated similarity score is less than the threshold score and the aggregated similarity score meets the threshold score when the aggregated similarity score is greater than or equal to the threshold score.

Based on the identified document layout, the layout engine 110 (e.g., via the document processing engine 160 and/or the second model 164 of the document processing engine 160), performs a document processing operation based on the identified layout. The document processing operation includes applying a dedicated or custom extraction model (e.g., the second model 164) to the received document 401 based on the identified layout to more accurately extract information from the document 401, applying correction logic to the received document 401 based on the identified layout to correct a value extracted from the received document, applying a custom extraction model based on the identified layout, and/or the like. Thus, the document processing operation may be more efficiently and/or accurately performed based on the accurate and precise identification of the layout of the received document.

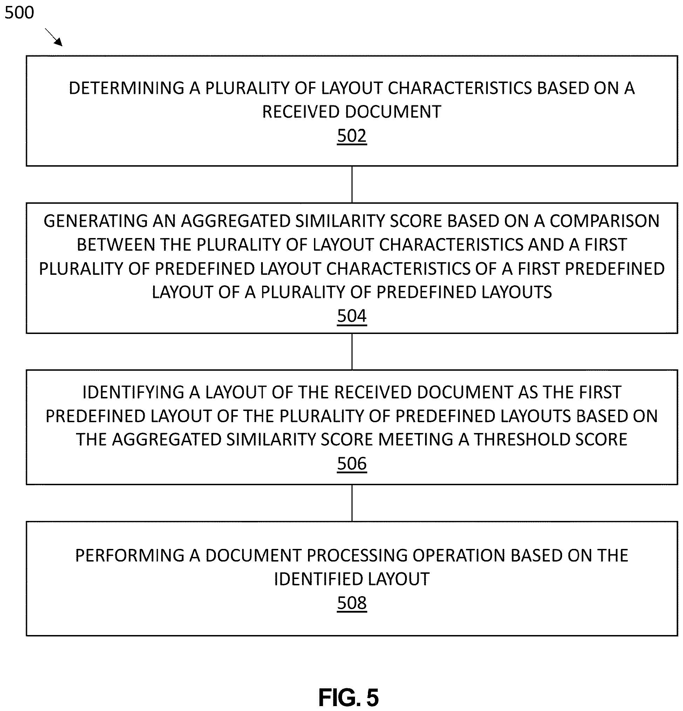

FIG. 5 depicts a flowchart illustrating a process 500 for multi-mode identification of document layouts, in accordance with some example embodiments. In some example embodiments, the process 500 may be performed by the layout engine 110. The layout engine 110 may receive a document including one or more document features, as described herein. The one or more document features may include a document header (e.g., a document header field), a table header (e.g., a table header field), a logo, vendor information, and/or the like.

At 502, the layout engine 110 may determine, based on the received document, a plurality of layout characteristics. The plurality of layout characteristics may include a spatial position of the one or more document features included in the received document and/or a numeric representation of the one or more document features included in the received document. The spatial position may include a spatial position of the document header fields and/or a spatial position of the table header fields. For example, the spatial position may include a spatial position of each of the document header fields and each of the table header fields included in the received document. The numeric representation may include a numeric representation of the logo. Additionally and/or alternatively, the plurality of layout characteristics include an identifier associated with the vendor information.

At 504, the layout engine 110 may generate an aggregated similarity score, such as based on the plurality of layout characteristics. For example, the layout engine 110 may generate a similarity score for each of the plurality of layout characteristics and aggregate the similarity score generated for each of the plurality of layout characteristics using one or more aggregation techniques as described herein.

The layout engine 110 may generate the aggregated similarity score by at least comparing the plurality of layout characteristics to a first plurality of predefined layout characteristics of a first predefined layout of a plurality of predefined layouts, such as the plurality of predefined layouts 155 stored in the database 150. The first plurality of predefined layout characteristics includes an average spatial position of the one or more document features included in a plurality of sample documents having the first predefined layout, an average numeric representation of the one or more document features included in the plurality of sample documents having the first predefined layout, and/or the like. In some embodiments, the first plurality of predefined layout characteristics further includes a spatial spread associated with the average spatial position.

In some embodiments, the layout engine 110 generates the average spatial position and/or the average numeric representation (see FIG. 3). For example, the layout engine 110 may extract, from the plurality of sample documents (e.g., the document 301), the one or more document features. The layout engine 110 may additionally and/or alternatively determine a spatial position of the one or more extracted document features in each of the plurality of sample documents. The layout engine 110 may additionally and/or alternatively average the spatial position (e.g., each of the coordinates) of the one or more extracted document features in each of the plurality of sample documents.

In some embodiments, the layout engine 110 determines the aggregated similarity score by iteratively comparing the plurality of layout characteristics of the received document to the plurality of predefined layout characteristics of a plurality of predefined layouts. For example, the layout engine 110 may determine the aggregated similarity score by iteratively comparing the plurality of layout characteristics to the plurality of predefined layout characteristics of the plurality of predefined layouts based on an execution priority order that may be assigned to each of the plurality of predefined layouts. In other words, the layout engine 110 may determine the aggregated similarity score based on a comparison between the determined plurality of layout characteristics and the plurality of predefined layout characteristics of a first predefined layout having a higher execution priority prior to determining the aggregated similarity score based on a comparison between the determined plurality of layout characteristics and the plurality of predefined layout characteristics of a second predefined layout having a lower execution priority order.

As an example, the layout engine 110 may generate the aggregated similarity score by at least comparing, prior to comparing the plurality of layout characteristics to the first plurality of predefined layout characteristics, the plurality of layout characteristics to a second plurality of predefined layout characteristics of a second predefined layout of the plurality of predefined layouts. In this example, the second plurality of predefined layout characteristics includes an average spatial position of the one or more document features included in a plurality of sample documents having the second predefined layout and/or an average numeric representation of the one or more document features included in the plurality of sample documents having the second predefined layout. Here, the second predefined layout has a lower execution priority than the first predefined layout.

At 506, the layout engine 110 identifies a layout of the received document as the first predefined layout of the plurality of predefined layouts based at least on the aggregated similarity score meeting a threshold score. The aggregated similarity score meets the threshold score when the aggregated similarity score is less than the threshold score.

At 508, the layout engine 110 (e.g., via the document processing engine 160), performs a document processing operation based on the identified layout. The document processing operation includes at least one of applying a dedicated extraction model to the received document based on the identified layout, applying correction logic to the received document based on the identified layout to correct a value extracted from the received document, and training a custom extraction model based on the identified layout. Thus, the document processing operation may be more efficiently and/or accurately performed based on the accurate and precise identification of the layout of the received document.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application:

Example 1: A system, including: at least one data processor; and at least one memory storing instructions which, when executed by the at least one data processor, result in operations including: determining, based on a received document, a plurality of layout characteristics including a spatial position of one or more document features included in the received document and/or a numeric representation of the one or more document features included in the received document; generating an aggregated similarity score by at least comparing the plurality of layout characteristics to a first plurality of predefined layout characteristics of a first predefined layout of a plurality of predefined layouts, wherein the first plurality of predefined layout characteristics includes an average spatial position of the one or more document features included in a plurality of sample documents having the first predefined layout and/or an average numeric representation of the one or more document features included in the plurality of sample documents having the first predefined layout; identifying a layout of the received document as the first predefined layout of the plurality of predefined layouts based on the aggregated similarity score meeting a threshold score; and performing a document processing operation based on the identified layout.

Example 2: The system of example 1, wherein the one or more document features includes a document header field, a table header field, and a logo, wherein the spatial position includes a spatial position of the document header field and a spatial position of the table header field, and wherein the numeric representation includes a numeric representation of the logo.

Example 3: The system of any one of examples 1 to 2, wherein the one or more document features further includes vendor information, and wherein the plurality of layout characteristics further includes an identifier associated with the vendor information.

Example 4: The system of any one of examples 1 to 3, wherein the spatial position includes spatial coordinates.

Example 5: The system of any one of examples 1 to 4, wherein the first plurality of predefined layout characteristics further includes a spatial spread associated with the average spatial position.

Example 6: The system of any one of examples 1 to 5, wherein the aggregated similarity score meets the threshold score when the aggregated similarity score is less than the threshold score.

Example 7: The system of any one of examples 1 to 6, wherein the aggregated similarity score is further generated by at least: generating a similarity score for each of the plurality of layout characteristics; and aggregating the similarity score generated for each of the plurality of layout characteristics.

Example 8: The system of any one of examples 1 to 7, wherein the average spatial position of the first plurality of predefined layout characteristics is generated by at least: extracting, from the plurality of sample documents, the one or more document features; determining a spatial position of the one or more extracted document features in each of the plurality of sample documents; and averaging the spatial position of the one or more extracted document features in each of the plurality of sample documents.

Example 9: The system of any one of examples 1 to 8, wherein the aggregated similarity score is further generated by at least comparing, prior to comparing the plurality of layout characteristics to the first plurality of predefined layout characteristics, the plurality of layout characteristics to a second plurality of predefined layout characteristics of a second predefined layout of the plurality of predefined layouts, wherein the second plurality of predefined layout characteristics includes an average spatial position of the one or more document features included in a plurality of sample documents having the second predefined layout and/or an average numeric representation of the one or more document features included in the plurality of sample documents having the second predefined layout, and wherein the second predefined layout has a lower execution priority than the first predefined layout.

Example 10: The system of any one of examples 1 to 9, wherein the document processing operation includes at least one of applying a dedicated extraction model to the received document based on the identified layout, applying correction logic to the received document based on the identified layout to correct a value extracted from the received document, and applying a custom extraction model based on the identified layout.

Example 11: A computer-implemented method, including: determining, based on a received document, a plurality of layout characteristics including a spatial position of one or more document features included in the received document and/or a numeric representation of the one or more document features included in the received document; generating an aggregated similarity score by at least comparing the plurality of layout characteristics to a first plurality of predefined layout characteristics of a first predefined layout of a plurality of predefined layouts, wherein the first plurality of predefined layout characteristics includes an average spatial position of the one or more document features included in a plurality of sample documents having the first predefined layout and/or an average numeric representation of the one or more document features included in the plurality of sample documents having the first predefined layout; identifying a layout of the received document as the first predefined layout of the plurality of predefined layouts based on the aggregated similarity score meeting a threshold score; and performing a document processing operation based on the identified layout.

Example 12: The method of example 11, wherein the one or more document features includes a document header field, a table header field, and a logo, wherein the spatial position includes a spatial position of the document header field and a spatial position of the table header field, and wherein the numeric representation includes a numeric representation of the logo.

Example 13: The method of any one of examples 11 to 12, wherein the one or more document features further includes vendor information, and wherein the plurality of layout characteristics further includes an identifier associated with the vendor information.

Example 14: The method of any one of examples 11 to 13, wherein the first plurality of predefined layout characteristics further includes a spatial spread associated with the average spatial position.

Example 15: The method of any one of examples 1 1 to 14, wherein the aggregated similarity score meets the threshold score when the aggregated similarity score is less than the threshold score.

Example 16: The method of any one of examples 1 1 to 15, wherein the aggregated similarity score is further generated by at least: generating a similarity score for each of the plurality of layout characteristics; and aggregating the similarity score generated for each of the plurality of layout characteristics.

Example 17: The method of any one of examples 11 to 16, wherein the average spatial position of the first plurality of predefined layout characteristics is generated by at least: extracting, from the plurality of sample documents, the one or more document features; determining a spatial position of the one or more extracted document features in each of the plurality of sample documents; and averaging the spatial position of the one or more extracted document features in each of the plurality of sample documents.

Example 18: The method of any one of examples 1 1 to 17, wherein the aggregated similarity score is further generated by at least comparing, prior to comparing the plurality of layout characteristics to the first plurality of predefined layout characteristics, the plurality of layout characteristics to a second plurality of predefined layout characteristics of a second predefined layout of the plurality of predefined layouts, wherein the second plurality of predefined layout characteristics includes an average spatial position of the one or more document features included in a plurality of sample documents having the second predefined layout and/or an average numeric representation of the one or more document features included in the plurality of sample documents having the second predefined layout, and wherein the second predefined layout has a lower execution priority than the first predefined layout.

Example 19: A non-transitory computer-readable medium storing instructions, which when executed by at least one data processor, result in operations including: determining, based on a received document, a plurality of layout characteristics including a spatial position of one or more document features included in the received document and/or a numeric representation of the one or more document features included in the received document; generating an aggregated similarity score by at least comparing the plurality of layout characteristics to a first plurality of predefined layout characteristics of a first predefined layout of a plurality of predefined layouts, wherein the first plurality of predefined layout characteristics includes an average spatial position of the one or more document features included in a plurality of sample documents having the first predefined layout and/or an average numeric representation of the one or more document features included in the plurality of sample documents having the first predefined layout; identifying a layout of the received document as the first predefined layout of the plurality of predefined layouts based on the aggregated similarity score meeting a threshold score; and performing a document processing operation based on the identified layout.

Example 20: The non-transitory computer-readable medium of example 19, wherein the one or more document features includes a document header field, a table header field, and a logo, wherein the spatial position includes a spatial position of the document header field and a spatial position of the table header field, and wherein the numeric representation includes a numeric representation of the logo.

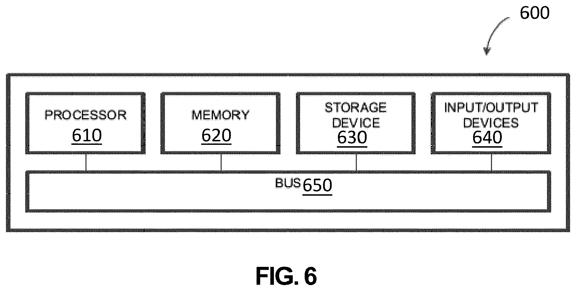

FIG. 6 depicts a block diagram illustrating a computing system 600 consistent with implementations of the current subject matter. Referring to FIGS. 1-6, the computing system 600 can be used to implement the document layout identification system 100, the layout engine 110, and/or any components therein.

As shown in FIG. 6, the computing system 600 can include a processor 610, a memory 620, a storage device 630, and input/output devices 640. The processor 610, the memory 620, the storage device 630, and the input/output devices 640 can be interconnected via a system bus 650. The processor 610 is capable of processing instructions for execution within the computing system 600. Such executed instructions can implement one or more components of, for example, the document layout identification system 100 and/or the layout engine 110. In some example embodiments, the processor 610 can be a single-threaded processor. Alternately, the processor 610 can be a multi-threaded processor. The processor 610 is capable of processing instructions stored in the memory 620 and/or on the storage device 630 to display graphical information for a user interface provided via the input/output device 640.

The memory 620 is a computer readable medium such as volatile or non-volatile that stores information within the computing system 600. The memory 620 can store data structures representing configuration object databases, for example. The storage device 630 is capable of providing persistent storage for the computing system 600. The storage device 630 can be a solid state drive, a floppy disk device, a hard disk device, an optical disk device, or a tape device, or other suitable persistent storage means. The input/output device 640 provides input/output operations for the computing system 600. In some example embodiments, the input/output device 640 includes a keyboard and/or pointing device. In various implementations, the input/output device 640 includes a display unit for displaying graphical user interfaces.

According to some example embodiments, the input/output device 640 can provide input/output operations for a network device. For example, the input/output device 640 can include Ethernet ports or other networking ports to communicate with one or more wired and/or wireless networks (e.g., a local area network (LAN), a wide area network (WAN), the Internet).

In some example embodiments, the computing system 600 can be used to execute various interactive computer software applications that can be used for organization, analysis and/or storage of data in various formats. Alternatively, the computing system 600 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing products and/or functionalities. Upon activation within the applications, the functionalities can be used to generate the user interface provided via the input/output device 640. The user interface can be generated and presented to a user by the computing system 600 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include client devices and servers. A client device and server are generally remote from each other and typically interact through a communication network. The relationship of client device and server arises by virtue of computer programs running on the respective computers and having a client device-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random query memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

In the descriptions above and in the claims, phrases such as "at least one of' or "one or more of' may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

**Claims**

1. A system, comprising:

   at least one data processor; and
   at least one memory storing instructions which, when executed by the at least one data processor, result in operations comprising:

   determining, based on a received document, a plurality of layout characteristics including a spatial position of one or more document features included in the received document and/or a numeric representation of the one or more document features included in the received document;
   generating an aggregated similarity score by at least comparing the plurality of layout characteristics to a first plurality of predefined layout characteristics of a first predefined layout of a plurality of predefined layouts, wherein the first plurality of predefined layout characteristics includes an average spatial position of the one or more document features included in a plurality of sample documents having the first predefined layout and/or an average numeric representation of the one or more document features included in the plurality of sample documents having the first predefined layout;

identifying a layout of the received document as the first predefined layout of the plurality of predefined layouts based on the aggregated similarity score meeting a threshold score; and

performing a document processing operation based on the identified layout.

2. The system of claim 1, wherein the one or more document features includes a document header field, a table header field, and a logo, wherein the spatial position includes a spatial position of the document header field and a spatial position of the table header field, and wherein the numeric representation includes a numeric representation of the logo.

3. The system of claim 2, wherein the one or more document features further includes vendor information, and wherein the plurality of layout characteristics further includes an identifier associated with the vendor information.

4. The system of any one of the preceding claims, wherein the spatial position includes spatial coordinates.

5. The system of any one of the preceding claims, wherein the first plurality of predefined layout characteristics further includes a spatial spread associated with the average spatial position.

6. The system of any one of the preceding claims, wherein the aggregated similarity score meets the threshold score when the aggregated similarity score is less than the threshold score.

7. The system of any one of the preceding claims, wherein the aggregated similarity score is further generated by at least: generating a similarity score for each of the plurality of layout characteristics; and aggregating the similarity score generated for each of the plurality of layout characteristics.

8. The system of any one of the preceding claims, wherein the average spatial position of the first plurality of predefined layout characteristics is generated by at least: extracting, from the plurality of sample documents, the one or more document features; determining a spatial position of the one or more extracted document features in each of the plurality of sample documents; and averaging the spatial position of the one or more extracted document features in each of the plurality of sample documents.

9. The system of any one of the preceding claims, wherein the aggregated similarity score is further generated by at least comparing, prior to comparing the plurality of layout characteristics to the first plurality of predefined layout characteristics, the plurality of layout characteristics to a second plurality of predefined layout characteristics of a second predefined layout of the plurality of predefined layouts, wherein the second plurality of predefined layout characteristics includes an average spatial position of the one or more document features included in a plurality of sample documents having the second predefined layout and/or an average numeric representation of the one or more document features included in the plurality of sample documents having the second predefined layout, and wherein the second predefined layout has a lower execution priority than the first predefined layout.

10. The system of any one of the preceding claims, wherein the document processing operation includes at least one of applying a dedicated extraction model to the received document based on the identified layout, applying correction logic to the received document based on the identified layout to correct a value extracted from the received document, and applying a custom extraction model based on the identified layout.

11. A computer-implemented method, comprising:

determining, based on a received document, a plurality of layout characteristics including a spatial position of one or more document features included in the received document and/or a numeric representation of the one or more document features included in the received document;

generating an aggregated similarity score by at least comparing the plurality of layout characteristics to a first plurality of predefined layout characteristics of a first predefined layout of a plurality of predefined layouts, wherein the first plurality of predefined layout characteristics includes an average spatial position of the one or more document features included in a plurality of sample documents having the first predefined layout and/or an average numeric representation of the one or more document features included in the plurality of sample documents having the first predefined layout;

identifying a layout of the received document as the first predefined layout of the plurality of predefined layouts based on the aggregated similarity score meeting a threshold score; and
performing a document processing operation based on the identified layout.

12. The method of claim 11, wherein the one or more document features includes a document header field, a table header field, and a logo, wherein the spatial position includes a spatial position of the document header field and a spatial position of the table header field, and wherein the numeric representation includes a numeric representation of the logo.

13. The method of any one of claims 11-12, wherein the aggregated similarity score is further generated by at least: generating a similarity score for each of the plurality of layout characteristics; and aggregating the similarity score generated for each of the plurality of layout characteristics.

14. A non-transitory computer-readable medium storing instructions, which when executed by at least one data processor, result in operations comprising:

determining, based on a received document, a plurality of layout characteristics including a spatial position of one or more document features included in the received document and/or a numeric representation of the one or more document features included in the received document;
generating an aggregated similarity score by at least comparing the plurality of layout characteristics to a first plurality of predefined layout characteristics of a first predefined layout of a plurality of predefined layouts, wherein the first plurality of predefined layout characteristics includes an average spatial position of the one or more document features included in a plurality of sample documents having the first predefined layout and/or an average numeric representation of the one or more document features included in the plurality of sample documents having the first predefined layout;
identifying a layout of the received document as the first predefined layout of the plurality of predefined layouts based on the aggregated similarity score meeting a threshold score; and
performing a document processing operation based on the identified layout.

15. A computer program comprising instructions which, when the program is executed by a computer, cause the computer to carry out the method of any of claims 11-13.

100

Document Processing Engine
160

First Model
162

Second
Model 164

Layout Engine
110

Network 130

User
Interface
125

Client Device 120

User 140

Database 150

Layouts 155

FIG. 1

**FIG. 2**

**FIG. 3**

400

Extraction of layout characteristics | Similarity calculation

408 | 406 | 422 | 424

404 | 410 | 426 | 428

New document 402 · · ·▷ Business Document 401 → DOX Service incl. OCR with logo detection → Document header fields → ⚙ 424

Table header fields → ⚙ 426

Sender logo → ⚙ 428

412

Vendor information → ⚙ 430

414

Similarity score aggregation 432

Match → Assign layout to document 436

No match

Continue with next stored layout 434

155

Database 150 · · ·▷ Read layout with highest remaining execution priority · · ·▷ Layout

FIG. 4

500

DETERMINING A PLURALITY OF LAYOUT CHARACTERISTICS BASED ON A
RECEIVED DOCUMENT
502

GENERATING AN AGGREGATED SIMILARITY SCORE BASED ON A COMPARISON
BETWEEN THE PLURALITY OF LAYOUT CHARACTERISTICS AND A FIRST
PLURALITY OF PREDEFINED LAYOUT CHARACTERISTICS OF A FIRST PREDEFINED
LAYOUT OF A PLURALITY OF PREDEFINED LAYOUTS
504

IDENTIFYING A LAYOUT OF THE RECEIVED DOCUMENT AS THE FIRST
PREDEFINED LAYOUT OF THE PLURALITY OF PREDEFINED LAYOUTS BASED ON
THE AGGREGATED SIMILARITY SCORE MEETING A THRESHOLD SCORE
506

PERFORMING A DOCUMENT PROCESSING OPERATION BASED ON THE
IDENTIFIED LAYOUT
508

FIG. 5

600

| PROCESSOR 610 | MEMORY 620 | STORAGE DEVICE 630 | INPUT/OUTPUT DEVICES 640 |

BUS 650

FIG. 6

Europäisches
Patentamt

European
Patent Office

Office européen
des brevets

# EUROPEAN SEARCH REPORT

**Application Number**

EP 23 21 5076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 595 235 B1 (SAMPSON STEVEN [FR] ET AL) 26 November 2013 (2013-11-26)<br>* column 5; figures 7, 8 *<br>* column 16 – column 17; figures 15, 16 *<br>* column 20; figure 17 *<br>----- | 1-15 | INV.<br>G06V30/418 |

TECHNICAL FIELDS
SEARCHED      (IPC)

G06V
G06F

The present search report has been drawn up for all claims

| Place of search | Date of completion of the search | Examiner |
|---|---|---|
| Munich | 23 April 2024 | Krawaritis, Achilles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 21 5076**

This annex lists the patent family members relating to the patent documents cited in  the above-mentioned European search report.
The members are as contained in the European Patent Office EDP file on
The European Patent Office is in no way liable for these particulars which are merely given for the purpose of information.

**23-04-2024**

| Patent document cited in search report | Publication date | Patent family member(s) | Publication date |
|---|---|---|---|
| US 8595235 B1 | 26-11-2013 | NONE | |

EPO FORM P0459